# EUROPEAN PATENT APPLICATION

(11) **EP 4 465 572 A1**
(43) Date of publication of application: **20.11.2024**
(21) Application number: 22919373.5
(22) Date of filing: 11.01.2022
(51) Int. Cl.: H04L 5/00, H04B 7/06, H04L 1/00, H04W 24/10

(54) **INFORMATION REPORTING METHOD AND APPARATUS, INFORMATION RECEIVING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/071459
(87) International publication number: WO 2023/133707

(57) **Abstract**

The present application relates to the field of mobile communication and discloses an information reporting method and apparatus, an information receiving method and apparatus, a device, and a storage medium. The method comprises: a terminal sends channel state information to a network device, wherein the channel state information indicates at least one of the following: at least one beam selected on the basis of at least one resource, the at least one resource being used for performing channel measurement; and an antenna port of at least one access network device corresponding to each beam among the at least one beam. Since the channel state information simultaneously takes into account the least one access network device, reported channel state information being limited by the access network device is overcome, and transmission performance is improved.

## Description

### TECHNICAL FIELD

The disclosure relates to the field of mobile communication, more particularly to a method and an apparatus for reporting information, a method and an apparatus for receiving information, a device and a storage medium.

### BACKGROUND

In mobile communication technologies, at least one access network device may provide services for a terminal, and the terminal may report a measurement result to the access network device through channel state information. However, since the reported channel state information (CSI) is relevant to only a single access network device, which causes that the reported CSI is limited to the access network device, thereby causing a poor transmission performance.

### SUMMARY

Embodiments of the disclosure provide a method and an apparatus for reporting information, a method and an apparatus for receiving information, a device and a storage medium. The channel state information consider at least one access network device at the same time, which break the limitation of the access network device on the reported channel state information, thereby improving the transmission performance. The technical solution as follows.

According to an aspect of the disclosure, there is provided a method for reporting information. The method is performed by a terminal. The method includes:
sending channel state information to a network device;
in which the channel state information indicates at least one of:
   at least one beam selected based on at least one resource, the at least one resource being used for a channel measurement; or
   antenna ports of at least one access network device corresponding to each of the at least one beam.

According to an aspect of the disclosure, there is provided a method for receiving information. The method is performed by a network device. The method includes:
receiving channel state information sent by a terminal;
in which the channel state information indicates at least one of:
   at least one beam selected based on at least one resource, in which the at least one resource is used for a channel measurement; or
   antenna ports of at least one access network device corresponding to each of the at least one beam.

According to an aspect of the disclosure, there is provided an apparatus for reporting information. The apparatus includes:
a sending module, configured to send channel state information to a network device;
in which the channel state information indicates at least one of:
   at least one beam selected based on at least one resource, in which the at least one resource is used for a channel measurement; or
   antenna ports of at least one access network device corresponding to each of the at least one beam.

According to an aspect of the disclosure, there is provided an apparatus for receiving information. The apparatus includes:
a receiving module, configured to receive channel state information sent by a terminal;
in which the channel state information indicates at least one of:
   at least one beam selected based on at least one resource, in which the at least one resource is used for a channel measurement; or
   antenna ports of at least one access network device corresponding to each of the at least one beam.

According to an aspect of the disclosure, there is provided a terminal. The terminal includes: a processor; a transceiver connected to the processor; and a memory configured to store instructions executable by the processor. The processor is configured to load and execute the executable instructions to perform the method for reporting information according to the above aspects.

According to an aspect of the disclosure, there is provided a network device. The network device includes: a processor; a transceiver connected to the processor; and a memory configured to store instructions executable by the processor. The processor is configured to load and execute executable instructions to perform the method for receiving information according to the above aspects.

According to an aspect of the disclosure, there is provided a computer-readable storage medium, having executable program codes stored thereon. The executable program codes are loaded and executed by a processor to perform the method for reporting information according to the above aspects or the method for receiving information according to the above aspects.

According to an aspect of the disclosure, there is provided a chip. The chip includes a programmable logic circuit and/or program instructions. The chip is configured to perform the method for reporting information according to the above aspects or the method for receiving information according to the above aspects when the chip runs on a terminal or a network device.

According to an aspect of the disclosure, there is provided a computer program product. The computer program product is configured to perform the method for reporting information according to the above aspects or the method for receiving information according to the above aspects when executed by a processor of a terminal or a network device.

With the method for reporting information according to embodiments of the disclosure, the channel state information reported by the terminal to the network device may indicate the at least one selected beam and/or the antenna ports of the at least one access network device corresponding to each of the at least one beam. Since the channel state information considers the at least one access network device at the same time, the limitation of the access network devices on the reported channel state information is broken, thereby improving the transmission performance.

### BRIEF DESCRIPTION OF THE DRAWINGS

In order to more clearly illustrate the technical solutions in embodiments of the disclosure, accompanying drawings needed to use in the embodiments will be introduced clearly below. Apparently, the accompanying drawings described below are only a part of embodiments of the disclosure. For the ordinary skilled in the art, other accompanying drawings may further be obtained based on these accompanying drawings without creative work.
FIG. 1 is a block diagram illustrating a communication system according to an exemplary embodiment of the disclosure.
FIG. 2 is a flowchart illustrating a method for reporting information according to an exemplary embodiment of the disclosure.
FIG. 3 is a flowchart illustrating a method for reporting information according to another exemplary embodiment of the disclosure.
FIG. 4 is a flowchart illustrating a method for receiving information according to an exemplary embodiment of the disclosure.
FIG. 5 is a block diagram illustrating an apparatus for reporting information according to an exemplary embodiment of the disclosure.
FIG. 6 is a block diagram illustrating an apparatus for receiving information according to an exemplary embodiment of the disclosure.
FIG. 7 is a block diagram illustrating a communication device according to an exemplary embodiment of the disclosure

### DETAILED DESCRIPTION

In order to enable the purpose, the technical solution and advantages of the disclosure more clear, detailed description will be further made below to implementations of the disclosure with reference to the accompanying drawings.

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all possible implementations consistent with the disclosure. Instead, they are merely examples of apparatuses and methods consistent with some aspects of the disclosure as detailed in the appended claims.

The terms employed in the disclosure are merely for the purpose of describing a detailed embodiment, and is not intended to limit the disclosure. As used in the disclosure and the appended claims, a singular form "a" or "the" is also intended to include plural forms, unless the context clearly indicates other meaning. It should also be understood that, the term "and/or" as used herein refers to including any or all possible combinations of one or more associated listed items.

It is understandable that, although terms "first, second, third and the like" may be employed in the disclosure to describe various kinds of information, the information should not be limited to these terms. These terms are merely used to distinguish the same type of information from each other. For example, without departing from a scope of the disclosure, first information may also be called second information, and similarly, the second information may also be called first information. Depending on the context, the word "if' as used herein may be interpreted as "when" or "in a case that..." or "in response to determining".

An application scene of the disclosure will be described as follows.

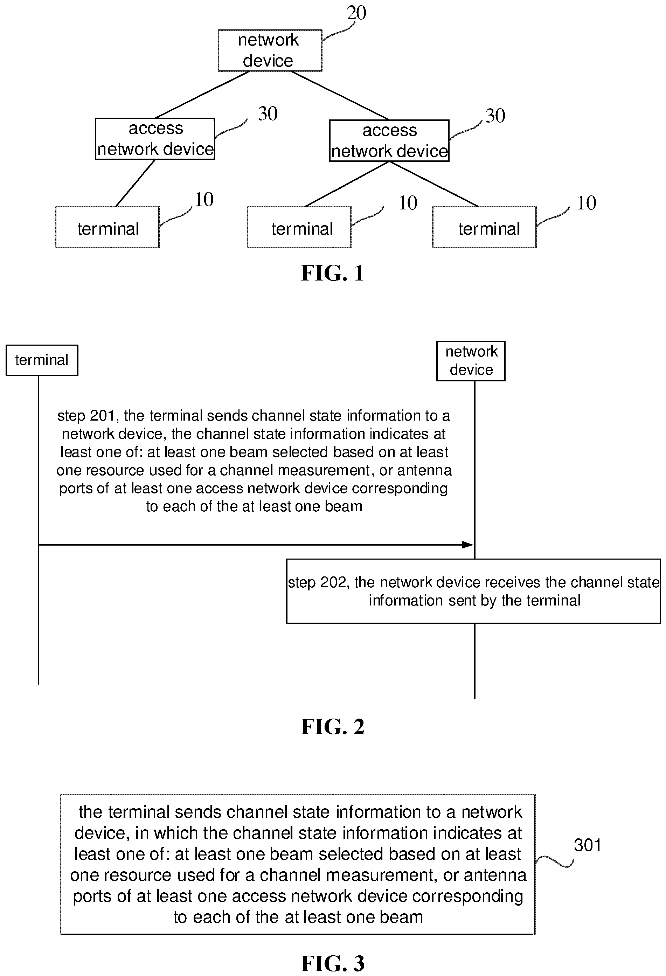

FIG. 1 is a block diagram illustrating a communication system according to an exemplary embodiment of the disclosure. The communication system may include: a terminal 10, a network device 20 and an access network device 30.

There are usually multiple terminals 10, and one or more terminals 10 may be distributed in a cell managed by a network device 20. The terminal 10 may include various handheld devices, vehicle-mounted devices, wearable devices and computing devices with the wireless communication function or other processing devices connected to wireless modems, as well as various forms of User Equipment (UEs), mobile stations (MSs) and the like. For convenience of description, the above devices are collectively referred to as terminals in the embodiments of the disclosure.

The network device 20 is a device deployed in an access network to provide the wireless communication function for the terminal 10. For convenience of description, the above devices providing the wireless communication function for the terminals 10 are collectively referred to as network devices in the embodiments of the disclosure. A connection may be established between the network device 20 and the terminal 10 through an air interface, such that communication is performed via the connection, including exchanging signaling and data. There may be multiple network devices 20, and two adjacent network devices 20 may perform communication in a wired or wireless way. The terminal 10 may switch between different network devices 20, that is, establish connections with different network devices 20.

The network device 20 may include various forms of macro base stations, micro base stations, relay stations, access points, and the like. Names of a device with a function of the network device may be different in systems with different wireless access technologies, for example, the device is called gNodeB or gNB in a 5G NR system. With the evolution of communication technologies, the name "network device" may change.

The network device 20 includes at least one access network device 30, through which the communication function is provided for the terminal 10. That is, the network device 20 extends its coverage by configuring the access network device(s) 30, such that more terminals 10 may access the network device 20.

In some embodiments, the access network device 30 is a transmission reception point (TRP) device, a transmission point (TP), a remote radio header (RRH), or a panel (antenna panel).

FIG. 2 is a flowchart illustrating a method for reporting information according to an exemplary embodiment of the disclosure. For example, the method is applied to the terminal and the network device illustrated in FIG. 1. The method includes at least part of the following.

At step 201, the terminal sends channel state information to a network device. The channel state information indicates at least one of: at least one beam selected based on at least one resource or antenna ports of at least one access network device corresponding to each of the at least one beam, in which the at least one resource is used for a channel measurement.

In embodiments of the disclosure, the network device may configure the at least one access network device to provide services for the terminal. For each access network device, each access network device is configured with multiple antenna ports. The terminal may indicate, through the channel state information sent to the network device, the beam(s) selected based on the at least one resource. In addition, the terminal may also indicate, through the channel state information, the antenna ports of the at least one access network device corresponding to each of the at least one beam selected based on the at least one resource.

The terminal may perform the measurement based on a Channel State Information-Reference Signal (CSI-RS) and/or a Synchronization Signal and Physical Broadcast Channel (PBCH) Block (SSB) sent by the network device, obtain the channel state information through the measurement based on at least one resource, and indicate at least one selected beam through the channel state information. In addition, the terminal may also indicate the antenna ports of the at least one access network device corresponding to each of the at least one beam through the channel state information.

In addition, since the disclosure relates to the at least one access network device, the terminal directly selects antenna ports of the antenna ports of the at least one access network device, such that the antenna ports of the at least one access network device are comprehensively and uniformly reported through the sent channel state information.

In some embodiments, the resource is called Channel Measurement Resource (CMR).

At step 202, the network device receives the channel state information sent by the terminal.

In embodiments of the disclosure, the network device may determine, based on the received channel state information, the beam(s) selected by the terminal or may determine, based on the received channel state information, the antenna ports of the at least one access network device corresponding to each of the at least one beam selected by the terminal, thereby ensuring that the network device knows the beam(s) selected by the terminal.

In some embodiments, the at least one resource corresponds to different resource subsets or different resource sets.

In some embodiments, different resource subsets or different resource sets correspond to different control resource set pool indexes, different Transmission Reception Points (TRPs), different Transmission Points (TPs), or different Remote Radio Headers (RRHs).

In embodiments of the disclosure, the resource subset or the resource set includes a plurality of resources. The "at least one resource" mentioned in embodiments of the disclosure belongs to different resource subsets or different resource sets.

For example, the at least one resource includes two resources, namely a first resource corresponding to a first resource subset and a second resource corresponding to a second resource subset.

In some embodiments, different resource sets or different resource subsets correspond to different control resource set pool indexes, different TRPs, different TPs, or different RRHs.

In some embodiments, the at least one resource includes at least one of a CSI-RS, an (SSB) or a Sounding Reference Signal (SRS).

In some embodiments, each access network device has an access network device identifier. The access network device identifier corresponding to the access network device is at least one of a resource index, a resource subset index, a resource set index, a control resource set pool index, an antenna port index, a TRP index, a TP index, an RRH index, or a panel index.

It is noteworthy that, in embodiments of the disclosure, the antenna port is only an example for explanation. In another embodiment, the antenna port, the CSI-RS port and the CSI-RS antenna port may be interchangeably used equivalently, which is not limited in embodiments of the disclosure.

It is noteworthy that, steps performed by the terminal in embodiments of the disclosure may be implemented separately to form new embodiments, and steps performed by the network device may be implemented separately to form new embodiments.

With the method for reporting information according to embodiments of the disclosure, through the channel state information reported by the terminal to a network device, at least one of the selected beam(s) or the antenna ports of the at least one access network device corresponding to each of the at least one beam may be indicated. Since the channel state information considers the at least one access network device simultaneously, the limitation of the access network device on the reported channel state information is broken, thereby improving the transmission performance.

In some embodiments, based on embodiments illustrated in FIG. 2, the channel state information may indicate not only the selected beam(s) and the antenna ports of the at least one access network device corresponding to each selected beam, but also the at least one selected access network device.

In embodiments of the disclosure, the network device has multiple configured access network devices. After the terminal performs the channel measurement to obtain the channel state information, the channel state information sent by the terminal to the network device may indicate at least one selected access network device.

From the multiple access network devices configured by the network device, the terminal may select at least one access network devices, and then report, through the channel state information, the at least one selected access network device as well as the corresponding channel state information.

In some embodiments, the channel state information includes first bit(s). The first bit is used for indicating whether a certain access network device is selected. The first bit may be preset or set in other ways.

For example, in embodiments of the disclosure, each access network device corresponds to a bit or a code point. Whether the access network device is selected may be indicated through the bit or the code point.

In some examples, each access network device corresponds to 1 bit, and such 1 bit is used for indicating whether the access network device is selected. As an example, when the value of the bit corresponding to the access network device is 0, it means that the access network device is not selected. When the value of the bit corresponding to the access network device is 1, it means that the access network device has been selected. Or, when the value of the bit corresponding to the access network device is 0, it means that the access network device has been selected. When the value of the bit corresponding to the access network device is 1, it means that the access network device is not selected.

It is noteworthy that, in the disclosure, the case that each access network device corresponds to 1 bit is only an example. It is understandable that, in some embodiments, each access network device may correspond to two bits, three bits or the like, which is not limited in the disclosure.

As another example, the network device has four configured access network devices, and thus the channel state information includes four bits, in which each bit is used for indicating whether a corresponding access network device is selected. For these four configured access network devices, there are 15 cases where the access network device(s) is/are selected.

With the method according to embodiments of the disclosure, the selected access network device(s) is/are indicated through the channel state information, such that the network device may determine which access network device(s) provide/provides services for the terminal, which not only improves an immediacy of information transmission, but also improves the transmission performance.

On the basis of embodiments illustrated in FIG. 2, each beam corresponds to the antenna ports of the at least one access network device.

In embodiments of the disclosure, the terminal may select at least one beam from multiple beams, and each beam corresponds to the antenna ports of the at least one access network device.

In some embodiments, one beam corresponds to antenna ports of one access network device. Or, one beam corresponds to antenna ports of multiple access network devices.

In some embodiments, the channel state information indicates one combination identifier. One combination identifier indicates one beam combination, and the beam combination includes one or more beams.

The antenna ports corresponding to each of the at least one beam are selected from the antenna ports of the at least one access network device.

In embodiments of the disclosure, the combination identifier included in the channel state information is used indicating the at least one beam, and the antenna ports corresponding to each of the at least one beam may be selected from the antenna ports of the same access network device or from the antenna ports of multiple access network devices. That is to say, in a case that the channel state information includes one combination identifier, the beam(s) is/are reported uniformly without being distinguished depending on the access network device(s) to which the antenna ports corresponding to the beam(s) belong.

In some embodiments, there is a correspondence between the combination identifier and the antenna ports. The at least one beam indicated by the combination identifier included in the channel state information may indicate, through the correspondence, the antenna ports of the access network device(s) corresponding to each beam.

For example, the network device is configured with two access network devices, i.e., a first access network device and a second access network device. The first access network device includes *N₁*N₂* antenna ports, where *N₁* represents the number of antenna ports in a first dimension, and *N₂* represents the number of antenna ports in a second dimension. The second access network device includes *N₁₁*N₂₂* antenna ports, where *N₁₁* represents the number of antenna ports in the first dimension, and *N₂₂* represents the number of antenna ports in the second dimension. The antenna ports corresponding to each beam may be selected from the *N₁*N₂* antenna ports and *N₁₁*N₂₂* antenna ports.

As an example, the channel state information sent by the terminal indicates *L* beams, and L beams is a sum of L1 beams, L2 beams and L3 beams, in which the antenna ports corresponding to the *L₁* beams are antenna ports belonging only to the first access network device; the antenna ports of the *L₂* beams are antenna ports belonging only to the second access network device; and some of the antenna ports of the *L₃* beams are antenna ports belonging to the first access network device and some are antenna ports belonging to the second access network device, and *L₁*+*L₂*+*L₃ = L*. Since it is not identified whether a certain beam comes from one access network device or multiple access network devices, the terminal needs to indicate which beams are selected from *N₁*N₂* +*N₁₁*N₂₂* beams as the *L* beams,.

In embodiments of the disclosure, by indicating the at least one beam through the combination identifier included in the channel state information, and by selecting the antenna ports corresponding to each beam from the antenna ports of the at least one access network device, the antenna ports of the at least one access network device may be reported through one beam, thereby improving the transmission performance.

In some examples, the channel state information indicates multiple combination identifiers, each combination identifier indicates one beam combination, and each beam combination includes one or more beams.

The multiple combination identifiers include a first type of combination identifier and a second type of combination identifier. The antenna ports corresponding to beam(s) included in one beam combination identified by the first type of combination identifier are all selected from antenna ports of the same access network device, and the antenna ports corresponding to beam(s) included in one beam combination identified by the second type of combination identifier are selected from antenna ports of multiple access network devices.

In embodiments of the disclosure, by indicating the at least one beam through the multiple combination identifiers included in the channel state information, since the antenna ports corresponding to a beam may be selected from the antenna ports of the same access network device or from the antenna ports of the multiple access network devices, the combination identifiers are divided into two types. The antenna ports corresponding to the beam(s) included in one beam combination indicated by the first type of combination identifier are all selected from the antenna ports of the same access network device, and the antenna ports corresponding to the beam(s) included in one beam combination indicated by the second type of combination identifier are selected from the antenna ports of the multiple access network devices. Therefore, whether the antenna ports corresponding to a beam belong to the same access network device or belong to multiple access network devices may be identified through the type of the combination identifier. That is to say, when the channel state information includes multiple combination identifiers, the reporting is performed based on the access network device(s) to which the antenna ports corresponding to the beam(s) belong.

In some embodiments, there is a correspondence between the combination identifier and the antenna ports. The at least one beam indicated by the combination identifier included in the channel state information may indicate, through the correspondence, the antenna ports of the access network device(s) corresponding to each beam.

For example, the network device is configured with two access network devices, namely the first access network device and the second access network device. The first access network device includes *N₁*N₂* antenna ports, where *N₁* represents the number of antenna ports in the first dimension, and *N₂* represents the number of antenna ports in the second dimension. The second access network device includes *N₁₁*N₂₂* antenna ports, where *N₁₁* represents the number of antenna ports in the first dimension, and *N₂₂* represents the number of antenna ports in the second dimension. The antenna ports corresponding to each beam may be selected from the *N₁*N₂* antenna ports and the *N₁₁*N₂₂* antenna ports.

As an example, the channel state information sent by the terminal indicates *L* beams in total, and the channel state information includes three combination identifiers, the first combination identifier indicates that the antenna ports of the *L₁* beams are antenna ports belonging only to the first access network device; the second combination identifier indicates that the antenna ports of the *L₂* beams are antenna ports belonging only to the second access network device; and the third combination identifier indicates that some of the antenna ports of the *L₃* beams are antenna ports belonging to the first access network device and some are antenna ports belonging to the second access network device, where *L₁*+*L₂*+*L₃* = *L.* In this way, for the first combination identifier, the terminal only needs to indicate which beam(s) is/are selected from *N1*N2* beams as the *L₁* beams; for the second combination identifier, the terminal only needs to indicate which beam(s) is/are selected from *N₁₁*N₂₂* beams as the *L₂* beams; and for the third combination identifier, the terminal needs to indicate which beam(s) is/are selected from *N₁*N₂ +N₁₁*N₂₂* beams as the *L₃* beams.

In embodiments of the disclosure, by indicating the at least one beam through various types of combination identifiers included in the channel state information, and by selecting the antenna ports corresponding to each beam from the antenna ports of the at least one access network device, the antenna ports of the at least one access network device may be reported through one beam, thereby improving the transmission performance. Different types of combination identifiers may be used for distinguishing the access network devices to which the antenna ports corresponding to each beam belong, thereby improving the transmission efficiency.

In some embodiments, the channel state information also indicates access network device identifiers of the access network devices corresponding respectively to the first type of combination identifier and/or the second type of combination identifier.

In embodiments of the disclosure, the channel state information not only distinguishes beams corresponding to the antenna ports belonging to different access network devices through the types of the combination identifiers, but also indicates the access network device identifier(s) of the access network device(s) corresponding to each combination identifier. It is understandable that, the channel state information may indicate the access network device identifier of the access network device corresponding to the first type of combination identifier, and may also indicate the access network device identifiers of the access network devices corresponding to the second type of combination identifier.

With the method according to embodiments of the disclosure, the access network devices corresponding to different combination identifiers are indicated through the channel state information, such that the comprehensiveness of contents reported through the channel state information is improved.

It is noteworthy that, the above embodiments may be split into new embodiments or combined with other embodiments into new embodiments, and the disclosure does not limit such combinations between embodiments.

FIG. 3 is a flowchart illustrating a method for reporting information according to another exemplary embodiment of the disclosure. For example, the method is performed by the terminal illustrated in FIG. 1. The method includes at least part of the following.

At step 301, the terminal sends channel state information to a network device, in which the channel state information indicates at least one of: at least one beam selected based on at least one resource or antenna ports of at least one access network device corresponding to each beam of the at least one beam, in which the at least one resource is used for a channel measurement.

Contents of the step 301 are similar to those of the step 201 in above embodiments illustrated in FIG. 2, which are not elaborated here.

In some embodiments, the channel state information further indicates: the at least one access network device selected.

In some examples, the channel state information comprises first bit(s). A first bit is used for indicating whether an access network device is selected.

The at least one selected access network device indicated by the channel state information and the first bit included in the channel state information are similar to "the at least one selected access network device indicated by the channel state information and the first bit included in the channel state information" described in above embodiments illustrated in FIG. 2, which are not elaborated here.

In some embodiments, each beam corresponds to antenna ports of the at least one access network device. For the channel state information, the channel state information may include one combination identifier or multiple combination identifiers.

In some examples, the channel state information indicates one combination identifier. One combination identifier indicates one beam combination, and one beam combination includes one or more beams. The antenna ports corresponding to each of the at least one beam are selected from the antenna ports of the at least one access network device.

In some examples, the channel state information indicates multiple combination identifiers. Each combination identifier indicates a respective beam combination, and each beam combination includes one or more beams. The multiple combination identifiers include a first type of combination identifier and a second type of combination identifier. The antenna ports corresponding to beam(s) included in one beam combination indicated by the first type of combination identifier are all selected from the antenna ports of the same access network device. The antenna ports corresponding to beam(s) included in one beam combination indicated by the second type of combination identifier are selected from antenna ports of multiple access network devices.

It is noteworthy that, the channel state information further indicates access network device identifier(s) of access network device(s) corresponding respectively to the first type of combination identifier and/or the second type of combination identifier.

One combination identifier or multiple combination identifiers included in the channel state information in embodiments of the disclosure are similar to "one combination identifier or multiple combination identifiers included in the channel state information" in embodiments illustrated in FIG. 2, which are not described here.

In some embodiments, the at least one resource in the disclosure corresponds to different resource subsets or different resource sets.

In some embodiments, different resource subsets or different resource sets correspond to different control resource set pool indexes, different TRPs, different TPs, or different RRHs.

The resource subset or resource set corresponding to the at least one resource in embodiments of the disclosure are similar to "the at least one resource" in embodiments illustrated in FIG. 2, which are not elaborated here.

In some embodiments, the access network device identifier corresponding to the access network device is represented by at least one of a resource index, a resource subset index, a resource set index, a control resource set pool index, an antenna port index, a TRP index, a TP index or an RRH index.

With the method according to embodiments of the disclosure, the at least one selected beam and the antenna ports of the at least one access network device corresponding to each of the at least one beam may be indicated through the channel state information reported by the terminal to the network device. Since the at least one access network device are considered simultaneously by the channel state information, the limitation of the access network devices on the reported channel state information is broken, thereby improving the transmission performance.

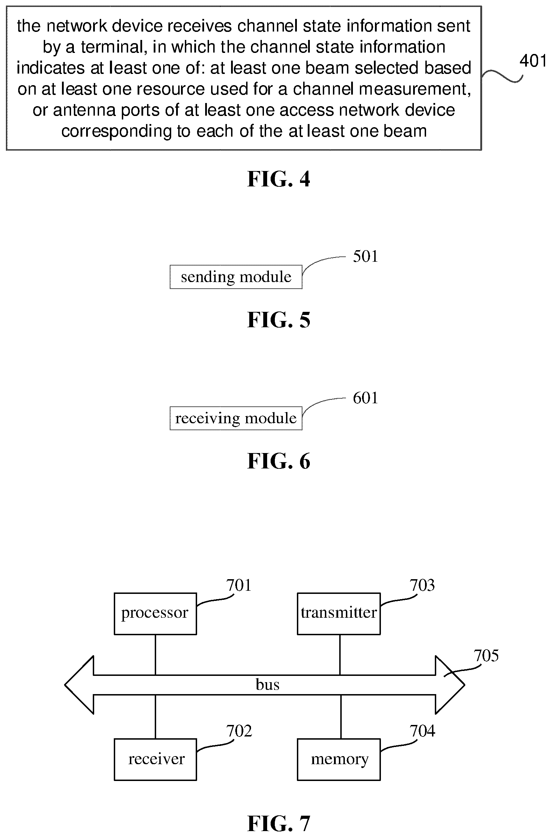

FIG. 4 is a flowchart illustrating a method for receiving information according to an exemplary embodiment of the disclosure. For example, the method is performed by the network device illustrated in FIG. 1. The method includes at least part of the following.

At step 401, the network device receives channel state information sent by a terminal, in which the channel state information indicates at least one of: at least one beam selected based on at least one resource, or antenna ports of at least one access network device corresponding to each of the at least one beam, in which the at least one resource is used for a channel measurement.

Contents of the step 401 are similar to those of the step 202 in the above embodiments illustrated in FIG. 2, which are not elaborated here.

In some embodiments, the channel state information further indicates: the at least one access network device selected.

In some embodiments, the channel state information comprises first bits. A first bit is used for indicating whether an access network device is selected.

The at least one selected access network device indicated by the channel state information and the first bit included in the channel state information are similar to "the at least one selected access network device indicated by the channel state information and the first bit included in the channel state information" in above embodiments illustrated in FIG. 2, which are not elaborated here.

In some embodiments, each beam corresponds to antenna ports of the at least one access network device. For the channel state information, the channel state information may include one combination identifier or multiple combination identifiers.

In some embodiments, the channel state information indicates one combination identifier. One combination identifier indicates one beam combination, and one beam combination includes one or more beams. The antenna ports corresponding to each of the at least one beam are all selected from the antenna ports of the at least one access network device.

In some embodiments, the channel state information indicates multiple combination identifiers. Each combination identifier indicates a respective beam combination, and each beam combination includes one or more beams. The multiple combination identifiers include a first type of combination identifier and a second type of combination identifier. The antenna ports corresponding to beam(s) included in one beam combination indicated by the first type of combination identifier are all selected from antenna ports of the same access network device. The antenna ports corresponding to beam(s) included in one beam combination indicated by the second type of combination identifier are selected from the antenna ports of multiple access network devices.

It is noteworthy that, the channel state information further indicates access network device identifier(s) of access network device(s) corresponding respectively to the first type of combination identifier and/or the second type of combination identifier.

One combination identifier or the multiple combination identifiers included in the channel state information in embodiments of the disclosure are similar to "the combination identifier or the multiple combination identifiers included in the channel state information" in the embodiments illustrated in FIG. 2, which are not described here.

In some embodiments, the at least one resource in the disclosure corresponds to different resource subsets or different resource sets.

In some embodiments, different resource subsets or different resource sets correspond to different control resource set pool indexes, different TRPs, different TPs, or different RRHs.

The resource subset or resource set corresponding to the at least one resource in embodiments of the disclosure are similar to the "at least one resource" in the embodiments illustrated in FIG. 2, which are not elaborated here.

In some embodiments, the access network device identifier corresponding to the access network device is represented by at least one of a resource index, a resource subset index, a resource set index, a control resource set pool index, an antenna port index, a TRP index, a TP index or an RRH index.

With the method according to embodiments of the disclosure, the at least one selected beam and the antenna ports of the at least one access network device corresponding to each of the at least one beam may be indicated through the channel state information reported by the terminal to the network device. Since the at least one access network device are considered simultaneously by the channel state information, the limitation of the access network devices on the reported channel state information is broken, thereby improving the transmission performance.

FIG. 5 is a block diagram illustrating an apparatus for reporting information according to an exemplary embodiment of the disclosure. As illustrated in FIG. 5, the apparatus includes a sending module 501.

The sending module 501 is configured to send channel state information to a network device.

The channel state information indicates at least one of:

at least one beam selected based on at least one resource, in which the at least one resource are used for a channel measurement; or

antenna ports of at least one access network device corresponding to each of the at least one beam.

In some embodiments, the channel state information further indicates: the at least one access network device selected.

In some embodiments, the channel state information includes first bit(s).

The first bit is used for indicating whether an access network device is selected.

In some embodiments, each beam corresponds to the antenna ports of the at least one access network device.

In some embodiments, the channel state information indicates an combination identifier, the combination identifier indicates a beam combination, and the beam combination includes one or more beams.

The antenna ports corresponding to each of the at least one beam are selected from the antenna ports of the at least one access network device.

In some embodiments, the channel state information indicates multiple combination identifiers, each combination identifier indicates a respective beam combination, and each beam combination includes one or more beams.

The multiple combination identifiers include a first type of combination identifier and a second type of combination identifier, antenna ports corresponding to beam(s) included in one beam combination indicated by the first type of combination identifier are selected from antenna ports of the same access network device, and antenna ports corresponding to beam(s) included in one beam combination indicated by the second type of combination identifier are selected from antenna ports of multiple access network devices.

In some embodiments, the channel state information further indicates access network device identifier(s) of access network device(s) corresponding respectively to the first type of combination identifier and/or the second type of combination identifier.

In some embodiments, the at least one resource corresponds to different resource subsets or different resource sets.

In some embodiments, different resource subsets or different resource sets correspond to different control resource set pool indexes, different TRPs, different TPs, or different RRHs.

In some embodiments, the access network device identifier corresponding to the access network device is at least one of a resource index, a resource subset index, a resource set index, control resource set pool index, an antenna port index, a TRP index, a TP index or an RRH index.

It is noteworthy that, the apparatus according to above embodiments merely illustrates division of the above functional modules when realizing functions of the apparatus. In a practical application, the above functional allocation may be completed by different functional modules as required, that is, an internal structure of the apparatus is divided into different functional modules to complete all or part of the above functions. In addition, the apparatus according to the above embodiment belongs to the same concept as method embodiments, and the specific implementation process of the apparatus may be found in method embodiments, which is not elaborated here.

FIG. 6 is a block diagram illustrating an apparatus for reporting information according to an exemplary embodiment of the disclosure. As illustrated in FIG. 6, the apparatus includes a receiving module 601.

The receiving module 601 is configured to receive channel state information sent by a terminal.

The channel state information indicates at least one of:
at least one beam selected based on at least one resource, in which the at least one resource is used for a channel measurement; or
antenna ports of at least one access network device corresponding to each of the at least one beam.

In some embodiments, the channel state information further indicates the at least one access network device selected.

In some embodiments, the channel state information includes first bit(s).

The first bit is used for indicating whether an access network device is selected.

In some embodiments, each beam corresponds to the antenna ports of the at least one access network device.

In some embodiments, the channel state information indicates an combination identifier. The combination identifier indicates a beam combination, and the beam combination includes one or more beams.

The antenna ports corresponding to each of the at least one beam are selected from the antenna ports of the at least one access network device.

In some embodiments, the channel state information indicates multiple combination identifiers. Each combination identifier indicates a respective beam combination, and each beam combination includes one or more beams.

The multiple combination identifiers include a first type of combination identifier and a second type of combination identifier. The antenna ports corresponding to beam(s) included in one beam combination indicated by the first type of combination identifier are all selected from antenna ports of the same access network device. The antenna ports corresponding to beam(s) included in one beam combination indicated by the second type of combination identifier are selected from antenna ports of multiple access network devices.

In some embodiments, the channel state information further indicates access network device identifier(s) of access network device(s) corresponding respectively to the first type of combination identifier and/or the second type of combination identifier.

In some embodiments, the at least one resource corresponds to different resource subsets or different resource sets.

In some embodiments, different resource subsets or different resource sets correspond to different control resource set pool indexes, different TRPs, different TPs, or different RRHs.

In some embodiments, the access network device identifier corresponding to the access network device is at least one of a resource index, a resource subset index, a resource set index, a control resource set pool index, an antenna port index, a TRP index, a TP index or an RRH index.

It is noteworthy that, the apparatus according to above embodiments merely illustrates division of the above functional modules when realizing functions of the apparatus. In a practical application, the above functional allocation may be completed by different functional modules as required, that is, an internal structure of the apparatus is divided into different functional modules to complete all or part of the above functions. In addition, the apparatus according to the above embodiment belongs to the same concept as method embodiments, and the specific implementation process of the apparatus may be found in method embodiments, which is not elaborated here.

FIG. 7 is a block diagram illustrating a communication device according to an exemplary embodiment of the disclosure. The communication device includes a processor 701, a receiver 702, a transmitter 703, a memory 704 and a bus 705.

The processor 701 includes one or more processing cores. The processor 701 is configured to execute various functional applications and information processing by running software programs and modules.

The receiver 702 and the transmitter 703 may be implemented as a communication component. The communication component may be a communication chip.

The memory 704 is connected to the processor 701 through the bus 705.

The memory 704 may be configured to store at least one program code. The processor 701 is configured to execute the at least one program code to implement the steps in the above method embodiments.

In addition, the communication device may be the terminal or the network device. The memory 704 may be implemented by any type of volatile or nonvolatile memory devices or a combination thereof. The volatile or nonvolatile memory device includes, but not limited to: a magnetic disk or optical disk, an electrically erasable programmable read-only memory (EEPROM), an erasable programmable read-only memory (EPROM), a static random access memory (SRAM), a read-only memory (ROM), a magnetic memory, a flash memory and a programmable read-only memory (PROM).

In an exemplary embodiment, there is further provided a computer readable storage medium having executable program codes stored thereon. The executable program codes are loaded and executed by a processor to cause the processor to implement the method for reporting information executed by the terminal or the method for receiving information executed by the communication device according to any of the above method embodiments.

In an exemplary embodiment, there is provided a chip. The chip includes a programmable logic circuit and/or program instructions. The chip is configured to implement the method for reporting information or the method for receiving information according to any of the above method embodiments when the chip runs on the terminal or the network device.

In an exemplary embodiment, there is provided a computer program product. The computer program product is configured to implement the method for reporting information or the method for receiving information according to any of the above method embodiments when executed by a processor of the terminal or the network device.

Those skilled in the art may understand that all or part of the steps to implement the above embodiments may be completed by hardware, or completed by a program to instruct related hardware. All the programs may be stored in a computer-readable storage medium. The above-mentioned storage medium may be the read-only memory, the magnetic disk or the optical disk, etc.

The above is merely an alternative embodiment of the disclosure, which is not configured to limit the disclosure. Any modification, equivalent substitution, improvement and the like made within the spirit and principle of the disclosure should be included in a protection scope of the disclosure.

## Claims

1. A method for reporting information, performed by a terminal, comprising:
sending channel state information to a network device;
wherein the channel state information indicates at least one of:
at least one beam selected based on at least one resource, wherein the at least one resource is used for a channel measurement; or
antenna ports of at least one access network device corresponding to each of the at least one beam.

2. The method of claim 1, wherein the channel state information further indicates: at least one selected access network device.

3. The method of claim 2, wherein the channel state information comprises a first bit; and
the first bit is used for indicating whether the access network device is selected.

4. The method of claim 1, wherein each beam corresponds to the antenna ports of the at least one access network device.

5. The method of claim 4, wherein the channel state information indicates one combination identifier, the combination identifier indicates a beam combination, and the beam combination comprises one or more beams; and
wherein the antenna ports corresponding to each of the at least one beam are selected from the antenna ports of the at least one access network device.

6. The method of claim 4, wherein the channel state information indicates a plurality of combination identifiers, each combination identifier indicates a beam combination, and each beam combination comprises one or more beams;
wherein the plurality of combination identifiers comprise a first type of combination identifier and a second type of combination identifier, antenna ports corresponding to a beam comprised in a beam combination indicated by the first type of combination identifier are selected from antenna ports of the same access network device, and antenna ports corresponding to a beam comprised in a beam combination indicated by the second type of combination identifier are selected from antenna ports of a plurality of access network devices.

7. The method of claim 6, wherein the channel state information further indicates access network device identifier(s) of access network device(s) corresponding respectively to the first type of combination identifier and/or the second type of combination identifier.

8. The method of claim 1, wherein the at least one resource corresponds to different resource subsets or different resource sets.

9. The method of claim 8, wherein different resource subsets or different resource sets correspond to different control resource set pool indexes, different transmission reception points (TRPs), different transmission points (TPs), or different Remote Radio Headers (RRHs).

10. The method of claim 1, wherein an access network device identifier corresponding to an access network device is at least one of a resource index, a resource subset index, a resource set index, a control resource set pool index, an antenna port index, a transmission reception point (TRP) index, a transmission point (TP) index or a Remote Radio Header (RRH) index.

11. A method for receiving information, performed by a network device, comprising:
receiving channel state information sent by a terminal;
wherein the channel state information indicates at least one of:
at least one beam selected based on at least one resource, wherein the at least one resource is used for a channel measurement; or
antenna ports of at least one access network device corresponding to each of the at least one beam.

12. The method of claim 11, wherein the channel state information further indicates: at least one selected access network device.

13. The method of claim 12, wherein the channel state information comprises a first bit; and the first bit is used for indicating whether an access network device is selected.

14. The method of claim 11, wherein each beam corresponds to the antenna ports of the at least one access network device.

15. The method of claim 14, wherein the channel state information indicates one combination identifier, the combination identifier indicates a beam combination, and the beam combination comprises one or more beams;
wherein the antenna ports corresponding to each of the at least one beam are selected from the antenna ports of the at least one access network device.

16. The method of claim 14, wherein the channel state information indicates a plurality of combination identifiers, each combination identifier indicates a beam combination, and each beam combination comprises one or more beams;
wherein the plurality of combination identifiers comprise a first type of combination identifier and a second type of combination identifier, antenna ports corresponding to a beam comprised in a beam combination indicated by the first type of combination identifier are selected from antenna ports of the same access network device, and antenna ports corresponding to a beam comprised in a beam combination indicated by the second type of combination identifier are selected from antenna ports of a plurality of access network devices.

17. The method of claim 16, wherein the channel state information further indicates access network device identifier(s) of access network device(s) corresponding respectively to the first type of combination identifier and/or the second type of combination identifier.

18. The method of claim 11, wherein the at least one resource corresponds to different resource subsets or different resource sets.

19. The method of claim 18, wherein different resource subsets or different resource sets correspond to different control resource set pool indexes, different transmission reception points (TRPs), different transmission points (TPs), or different Remote Radio Headers (RRHs).

20. The method of claim 11, wherein an access network device identifier corresponding to an access network device is at least one of a resource index, a resource subset index, a resource set index, a control resource set pool index, an antenna port index, a transmission reception point (TRP) index, a transmission point (TP) index or a Remote Radio Header (RRH) index.

21. An apparatus for reporting information, comprising:
a sending module, configured to send channel state information to a network device;
wherein the channel state information indicates at least one of:
at least one beam selected based on at least one resource, wherein the at least one resource is used for a channel measurement; or
antenna ports of at least one access network device corresponding to each of the at least one beam.

22. The apparatus of claim 21, wherein each beam corresponds to the antenna ports of the at least one access network device.

23. The apparatus of claim 22, wherein the channel state information indicates an combination identifier, the combination identifier indicates a beam combination, and the beam combination comprises one or more beams;
wherein antenna ports corresponding to each of the at least one beam are selected from the antenna ports of the at least one access network device.

24. The apparatus of claim 22, wherein the channel state information indicates a plurality of combination identifiers, each combination identifier indicates a beam combination, and each beam combination comprises one or more beams;
wherein the plurality of combination identifiers comprise a first type of combination identifier and a second type of combination identifier, antenna ports corresponding to a beam comprised in a beam combination indicated by the first type of combination identifier are selected from antenna ports of the same access network device, and antenna ports corresponding to a beam comprised in a beam combination indicated by the second type of combination identifier are selected from antenna ports of a plurality of access network devices.

25. The apparatus of claim 24, wherein the channel state information further indicates access network device identifier(s) of access network device(s) corresponding respectively to the first type of combination identifier and/or the second type of combination identifier.

26. An apparatus for receiving information, comprising:
a receiving module, configured to receive channel state information sent by a terminal;
wherein the channel state information indicates at least one of:
at least one beam selected based on at least one resource, wherein the at least one resource is used for a channel measurement; or
antenna ports of at least one access network device corresponding to each of the at least one beam.

27. The apparatus of claim 26, wherein each beam corresponds to the antenna ports of the at least one access network device.

28. The apparatus of claim 27, wherein the channel state information indicates an combination identifier, the combination identifier indicates a beam combination, and the beam combination comprises one or more beams;
wherein antenna ports corresponding to each of the at least one beam are selected from the antenna ports of the at least one access network device.

29. The apparatus of claim 27, wherein the channel state information indicates a plurality of combination identifiers, each combination identifier indicates a beam combination, and each beam combination comprises one or more beams;
wherein the plurality of combination identifiers comprise a first type of combination identifier and a second type of combination identifier, antenna ports corresponding to a beam comprised in a beam combination indicated by the first type of combination identifier are selected from antenna ports of the same access network device, and antenna ports corresponding to a beam comprised in a beam combination indicated by the second type of combination identifier are selected from antenna ports of a plurality of access network devices.

30. The apparatus of claim 29, wherein the channel state information further indicates access network device identifier(s) of access network device(s) corresponding respectively to the first type of combination identifier and/or the second type of combination identifier.

31. A terminal, comprising:
a processor; and
a transceiver, connected to the processor,
wherein the processor is configured to load and to execute executable instructions to perform the method for reporting information according to any one of claims 1 to 10.

32. A network device, comprising:
a processor; and
a transceiver, connected to the processor,
wherein the processor is configured to load and to execute executable instructions to perform the method for receiving information according to any one of claims 11 to 20.

33. A computer-readable storage medium, having executable program codes stored thereon, wherein the executable program codes are loaded and executed by a processor to perform the method for reporting information according to any one of claims 1 to 10, or to perform the method for receiving information according to any one of claims 11 to 20.

34. A computer program product, wherein when the computer program product is executed by a processor of a low-capacity terminal or a network device, the method for reporting information according to any one of claims 1 to 10 or the method for receiving information according to any one of claims 11 to 20 is performed.
